# EUROPÄISCHE PATENTSCHRIFT

(11) **EP 4 275 569 B1**
(45) Veröffentlichungstag und Bekanntmachung des Hinweises auf die Patenterteilung: **13.11.2024**
(21) Anmeldenummer: 23172068.1
(22) Anmeldetag: 08.05.2023
(51) Int. Cl.: A47L 11/16, A47L 11/20, A47L 11/30, A47L 11/40

(54) **SAUGFUSSANORDNUNG FÜR EINE BODENREINIGUNGSMASCHINE**
SUCTION FOOT ASSEMBLY FOR A FLOOR-RENDER
AGENCEMENT DE PIED D'ASPIRATION POUR UNE MACHINE DE NETTOYAGE DU SOL

(30) Priorität: 10.05.2022 DE 102022111607
(43) Veröffentlichungstag der Anmeldung: 15.11.2023
(73) Patentinhaber: Hako GmbH, 23843 Bad Oldesloe (DE)
(72) Erfinder: Tabeling, Christian, 23617 Stockelsdorf (DE); Stahlkopf, Gerd, 21514 Büchen (DE); Katenhusen, Heinrich, 23843 Bad Oldesloe (DE)
(74) Vertreter: Bird & Bird LLP - Hamburg

(56) Entgegenhaltungen:
- EP-A1- 2 248 455
- US-A- 4 006 506
- US-A1- 2017 100 011

## Beschreibung

Die vorliegende Erfindung betrifft eine Saugfußanordnung zur Anbringung an einer Bodenreinigungsmaschine mit einem Saugfuß, der eine Basis aufweist, an der eine vordere Sauglippe und eine hintere Sauglippe angebracht sind, die sich parallel zueinander von der Basis weg erstrecken und die so voneinander beabstandet sind, dass von den Sauglippen und der Basis ein Absaugraum begrenzt wird, wobei sich die von der Basis entfernten Kanten der Sauglippen in einer Kontaktebene erstrecken und ausgebildet sind, auf einer zu reinigenden Bodenfläche aufzuliegen, mit einem an der Basis angebrachten Saugfußhalter, der einen Kupplungsabschnitt aufweist, mit einer Saugfußanbindung, die sich zwischen einem Kupplungsende und einem Maschinenende erstreckt, wobei das Maschinenende ausgebildet ist, an einer Bodenreinigungsmaschine, vorzugsweise um eine Hochachse schwenkbar, angebracht zu sein, sowie eine Bodenreinigungsmaschine, die mit einer derartigen Saugfußanordnung versehen ist.

Derartige Saugfußanordnungen sind aus dem Stand der Technik bekannt und sind bei Bodenreinigungsmaschinen vorgesehen, die ein Schrubbdeck aufweisen, in deren Bereich Reinigungsflüssigkeit auf eine zu reinigende Bodenfläche aufgebracht wird, um mit Hilfe des Schrubbdecks Schmutz auf der Bodenfläche zu lösen. Der in Bewegungsrichtung der Bodenreinigungsmaschine hinter dem Schrubbdeck angeordnete Saugfuß dient dazu, mithilfe einer Unterdruckquelle, die mit einem Schmutzflüssigkeitsbehälter in der Bodenreinigungsmaschine verbunden ist, die Schmutzflüssigkeit von der zu reinigenden Bodenfläche wieder abzuführen.

Aus dem Stand der Technik ist es dazu bekannt, dass der Saugfuß der Bodenreinigungsmaschine über sogenannte Griffschrauben an einer maschinenseitigen Saugfußanbindung befestigt wird. Die Saugfußanbindung weist dazu nach hinten offene Langlöcher auf, damit im Kollisionsfall des seitlich über die Bodenreinigungsmaschine herausstehenden Saugfußes mit einem Gegenstand dieser aus der Saugfußanbindung herausgerissen wird und keine Schäden an den Bauteilen des Saugfußes oder der Halterung entstehen. Damit der Saugfuß sich jedoch nicht schon während der Fahrt löst, muss der Bediener eine entsprechend große Handkraft beim Befestigen der Griffschrauben aufbringen. Dabei kommt es häufig, auch wenn dies nicht beabsichtigt ist, zum Einsatz von Werkzeugen, um die entsprechende Kraft aufzubringen, obwohl eine werkzeuglose Bedienung für die tägliche Reinigung des Saugfußes vorgesehen war.

Um den ständigen und vollflächigen Kontakt des Saugfußes mit der zu reinigenden Bodenfläche auch beim Überfahren von Bodenunebenheiten sicherzustellen und gleichzeitig aber seine Relativlage zum Boden beizubehalten, werden oft Trapezgelenkkonstruktionen für die Halterung des Saugfußes eingesetzt. Diese sind jedoch häufig sehr aufwendig konstruiert.

Eine Saugfußanordnung zur Anbringung an einer Bodenreinigungsmaschine gemäß dem Oberbegriff des Anspruchs 1 ist z.B. aus US-A-2017100011 bekannt.

Ausgehend vom Stand der Technik ist es daher die Aufgabe der vorliegenden Erfindung, eine Saugfußanordnung bereitzustellen, die möglichst einfach, vorzugsweise ohne Verwendung von Werkzeug, zulässt, den Saugfuß an der Maschine zu befestigen, wobei die Befestigung derart ausgestaltet ist, dass sie beim Auftreten großer Kräfte selbsttätig gelöst wird, ohne dass es zu Schäden an der Saugfußanordnung kommt.

Erfindungsgemäß wird diese Aufgabe durch eine Saugfußanordnung zur Anbringung an einer Bodenreinigungsmaschine gelöst mit einem Saugfuß, der eine Basis aufweist, an der eine vordere Sauglippe und eine hintere Sauglippe angebracht sind, die sich, vorzugsweise parallel zueinander, von der Basis weg erstrecken und die so voneinander beabstandet sind, dass von den Sauglippen und der Basis ein Absaugraum begrenzt wird, wobei sich die von der Basis entfernten Kanten der Sauglippen in einer Kontaktebene erstrecken und ausgebildet sind, auf einer zu reinigenden Bodenfläche aufzuliegen, mit einem mit der Basis verbundenen Saugfußhalter, der einen Kupplungsabschnitt aufweist, mit einer Saugfußanbindung, die sich zwischen einem Kupplungsende und einem Maschinenende erstreckt, wobei das Maschinenende ausgebildet ist, an einer Bodenreinigungsmaschine, vorzugsweise um eine Hochachse schwenkbar, angebracht zu sein, wobei einer aus dem Kupplungsabschnitt und dem Kupplungsende einen Zapfenabschnitt aufweist, der sich entlang einer Zapfenachse erstreckt, die parallel zu der Kontaktebene verläuft, wobei der andere aus dem Kupplungsabschnitt und dem Kupplungsende ein erstes und ein zweites Klemmelement aufweist, die einander gegenüberliegen, freie Enden aufweisen und derart konkav verlaufen, dass ein Aufnahmeabschnitt zwischen den Klemmelementen gebildet ist, in dem der Zapfenabschnitt aufgenommen ist, wobei der Abstand der freien Enden der Klemmelemente voneinander geringer ist als der Abstand der Klemmelemente im Aufnahmeabschnitt und wobei eines oder beide Klemmelemente derart elastisch verformbar sind, dass der Zapfenabschnitt senkrecht zu dessen Erstreckungsrichtung über die freien Enden aus dem Aufnahmeabschnitt heraus und in diesen hinein bewegt werden kann.

Demnach weist die erfindungsgemäße Saugfußanordnung zunächst eine Basis auf, die sich von einem ersten Ende zu einem zweiten Ende, vorzugsweise in einer gebogenen Form, erstrecken kann, und an der Basis sind eine vordere Sauglippe und eine hintere Sauglippe angebracht, die sich vorzugsweise parallel zueinander von der Basis weg erstrecken und sich darüber hinaus über die Länge der Basis zwischen dem ersten Ende und zweiten Ende erstrecken. Jede der Sauglippen weist entfernt von der Basis eine Kante auf, die vorgesehen ist, auf einer zu reinigenden Bodenfläche aufzuliegen, wenn mit dem Saugfuß Schmutzflüssigkeit von der zu reinigenden Bodenfläche abgeführt werden soll. Vorzugsweise ist die vordere Sauglippe geschlitzt ausgeführt, sodass sich Schlitze weg von der Kante hin zu der Basis erstrecken, sodass sich vor der vorderen Sauglippe befindliche Schmutzflüssigkeit in den zwischen den Sauglippen gebildeten Absaugraum gelangen kann, der zudem von der Basis begrenzt wird. Die Kanten der Sauglippen sind, damit der Absaugraum beim Betrieb möglichst gut abgedichtet ist, der Art angebracht, dass sie sich in einer gemeinsamen Kontaktebene erstrecken.

Erfindungsgemäß ist weiter vorgesehen, dass ein Saugfußhalter an der Basis vorgesehen ist, der einen Kupplungsabschnitt aufweist, über den er mit dem Kupplungsende einer Saugfußanbindung verbunden werden kann, die ebenfalls Teil der erfindungsgemäßen Saugfußanordnung ist und die sich erfindungsgemäß zwischen dem Kupplungsende und einem Maschinenende erstreckt. Das Maschinenende der Saugfußanordnung ist derart ausgestaltet, dass es beispielsweise an dem Maschinengehäuse oder einem Schrubbdeck einer Bodenreinigungsmaschine angebracht werden kann. Die Anbringung ist vorzugsweise so ausgestaltet, dass die Saugfußanbindung relativ zu dem Maschinengehäuse oder dem Schrubbdeck um eine Hochachse schwenkbar ist, die, insbesondere wenn der Saugfuß auf einer zu reinigenden Bodenfläche angeordnet ist, senkrecht zu der Kontaktebene und gegebenenfalls auch senkrecht zu der zu reinigenden Bodenfläche verläuft.

Die Verbindung zwischen dem Saugfußhalter und der Saugfußanbindung ist erfindungsgemäß derart ausgestaltet, dass der Kupplungsabschnitt des Saugfußhalters oder das Kupplungsende der Saugfußanbindung einen Zapfenabschnitt aufweisen, der sich entlang einer Zapfenachse erstreckt, die parallel zu der Kontaktebene verläuft.

In bevorzugter Weise kann die Zapfenachse, wenn sich die Basis von einem ersten zu einem zweiten Ende erstreckt, parallel zu einer Verbindungslinie verlaufen, die sich parallel zu der Kontaktebene zwischen den Enden der Basis erstreckt.

Wenn der Kupplungsabschnitt den Zapfenabschnitt aufweist, sind erfindungsgemäß an dem Kupplungsende ein erstes und ein zweites Klemmelement vorgesehen, die elastisch ausgebildet sind und einander gegenüber liegen, sodass zwischen ihnen ein Aufnahmeabschnitt ausgebildet ist. Die Klemmelemente verlaufen von dem jeweils anderen Klemmelement ausgesehen konkav, um den Aufnahmeabschnitt zu bilden, und weisen darüber hinaus freie Enden auf, in deren Bereich der Abstand zwischen den Klemmelementen geringer ist als im Aufnahmeabschnitt. Schließlich kann wenigstens eines der Klemmelemente derart elastisch verformt werden, dass der Zapfenabschnitt zwischen den freien Enden hindurch in den Aufnahmeabschnitt hinein oder aus diesem herausgeführt werden kann.

Wenn das Kupplungsende den Zapfenabschnitt aufweist, sind derartige Klemmelemente erfindungsgemäß an dem Kupplungsende Abschnitt vorgesehen.

Bei dem erfindungsgemäßen Aufbau ist es somit möglich, dass der Saugfußhalter und die Saugfußanbindung durch "Einklicken" des Zapfenabschnitt zwischen die Klemmelemente miteinander verbunden werden können, wobei eine Verwendung von Werkzeug nicht erforderlich ist. Darüber hinaus ergibt sich der Vorteil, dass dann, wenn auf den Saugfuß aufgrund von Hindernissen, entlang derer sich die Bodenreinigungsmaschine mit der erfindungsgemäßen Saugfußanordnung bewegt, Kräfte senkrecht zu dem Zapfenabschnitt wirken, die einen gewissen Schwellwert überschreiten, der Zapfenabschnitt aus dem Aufnahmeabschnitt unter Verformung wenigstens eines der Klemmelemente selbsttätig herausgelöst wird. Dadurch wird die Verbindung zwischen dem Saugfußhalter und der Saugfußanbindung gelöst und verhindert, dass bei einem Kontakt mit einem Hindernis der Saugfuß Schaden nimmt.

Schließlich ist die Verbindung zwischen dem Saugfußhalter und der Saugfußanbindung vorzugsweise derart ausgestaltet, dass die Klemmelemente gegenüber dem Zapfenabschnitt um die Zapfenachse verschwenkbar sind, sodass die vertikale Position des Saugfußes relativ zu der Saugfußanbindung sich selbsttätig ändern kann.

In einer bevorzugten Ausführungsform ist der Zapfenabschnitt an dem Kupplungsende der Saugfußanbindung vorgesehen, und der Kupplungsabschnitt an dem Saugfußhalter weist die Klemmelemente auf. Es ist aber auch denkbar, dass die Die Klemmelemente auch an der Saugfußanbindung angebracht sind und die Zapfen am Saugfußhalter.

In einer bevorzugten Ausführungsform der vorliegenden Erfindung ist an einem aus der Basis und dem Saugfußhalter ein Einsteckkörper angebracht, der sich entlang einer ersten Längsachse erstreckt, wobei an dem anderen aus der Basis und dem Saugfußhalter ein Halteabschnitt vorgesehen ist, in dem ein Aufnahmebereich ausgebildet ist, wobei der Einsteckkörper in dem Aufnahmebereich aufgenommen und in einer eingeschobenen Stellung ist, wobei der Aufnahmebereich so ausgestaltet ist, dass er sich entlang einer zweiten Längsachse erstreckt, wobei die zweite Längsachse parallel zu der Kontaktebene verläuft, wobei der Einsteckkörper und der Aufnahmebereich derart ausgestaltet sind, dass der Einsteckkörper zur Aufnahme in den Aufnahmebereich entlang der zweiten Längsachse in den Aufnahmebereich bis zu der eingeschobenen Stellung, die durch einenAnschlag festgelegt sein kann, einschiebbar ist, wobei die erste und die zweite Längsachse zusammenfallen und in der eingeschobenen Stellung der Einsteckkörper um die zweite Längsachse gegenüber dem Halteabschnitt verschwenkbar ist.

An dieser Stelle wird darauf hingewiesen, dass das Konzept, bei dem an einem aus dem Saugfußhalter und der Basis des Saugfußes ein Einsteckkörper und an dem anderen ein Halteabschnitt mit einem Aufnahmebereich vorgesehen ist, in den der Einsteckkörper bis zu einer eingeschobenen Stellung eingeschoben werden kann und dann verschwenkbar in dem Aufnahmebereich gehaltert ist, selbstständig erfinderisch ist. Dieses Konzept sowie dessen nachfolgend beschriebene Ausführungsformen sind damit nicht darauf beschränkt, zusammen mit den weiteren hierin beschriebenen Aspekten an einer Saugfußanordnung verwendet zu werden. Vielmehr kann das Konzept aus Einsteckkörper und Aufnahmebereich ganz allgemein dazu verwendet werden, einen Saugfuß an einer dafür vorgesehenen Halterung schwenkbar anzubringen.

In dieser bevorzugten Ausführungsform der vorliegenden Erfindung ist die Verbindung zwischen dem Saugfuß bzw. dessen Basis und dem Saugfußhalter derart ausgestaltet, dass an einem von dem Saugfuß und dem Saugfußhalter ein Einsteckkörper vorgesehen ist, der sich entlang einer ersten Längsachse erstreckt, während an dem anderen von dem Saugfuß und dem Saugfußhalter ein Halteabschnitt mit einem Aufnahmebereich beispielsweise in Form einer Aussparung vorgesehen ist, in den der Einsteckkörper aufgenommen ist und dort eine eingeschobenen Stellung einnimmt. Dabei ist der Aufnahmebereich des Halteabschnitts so ausgestaltet, dass er sich entlang einer zweiten Längsachse erstreckt, sodass dann, wenn der Einsteckkörper in der eingeschobenen Stellung ist, die erste und die zweite Längsachse zusammenfallen. Zudem sind der Aufnahmebereich und der Einsteckkörper so ausgebildet, dass der Einsteckkörper um die erste Längsachse relativ zu dem Halteabschnitt verschwenkt werden kann. Außerdem kann der Einsteckkörper entlang der zweiten Längsachse in den Aufnahmebereich vorzugsweise bis zu einem Anschlag eingeschoben oder aus diesem herausgezogen werden.

Schließlich sind bei dieser bevorzugten Ausführungsform die erste und die zweite Längsachse derart angeordnet, dass sie parallel zu der Kontaktebene und parallel zu der Zapfenachse verlaufen. Insbesondere können die erste und/oder die zweite Längsachse und die Zapfenachse beabstandet und parallel zueinander sein.

Durch diese Anordnung und die Verschwenkbarkeit des Einsteckkörpers relativ zu dem Halteabschnitt kann die Basis des Saugfußes um eine zweite Achse schwenken, sodass die Basis nicht nur in der Höhe relativ zu der Saugfußanbindung variabel gehaltert ist, sondern auch die Orientierung der Basis des Saugfußes relativ zu der zu reinigenden Bodenfläche unabhängig von der vertikalen Position der Basis relativ zu der Saugfußanbindung veränderbar werden kann.

Darüber hinaus kann bei dieser bevorzugten Ausführungsform der Saugfuß in einfacher Weise von dem Saugfußhalter gelöst und wieder mit diesem verbunden werden. Es ist dazu einerseits lediglich erforderlich, den Saugfuß durch eine Bewegung entlang der Längsachse und damit zur Seite hinzubewegen, sodass der Einsteckkörper aus dem Aufnahmebereich herausgezogen wird. Zum Verbinden kann der Saugfuß andererseits ebenfalls durch eine Bewegung von der Seite her mit dem Saugfußhalter verbunden werden, indem der Einsteckkörper in den Aufnahmebereich eingeschoben wird.

In einer weiteren bevorzugten Ausführungsform weist der Einsteckkörper einen Innenraum auf, wobei einer aus dem Innenraum und dem Aufnahmebereich mit dem Absaugraum verbunden ist, wobei
- der andere aus dem Innenraum und dem Aufnahmebereich mit einem Anschluss für eine Absaugleitung verbunden ist, der an dem Einsteckkörper oder dem Halteabschnitt vorgesehen ist, und in der eingeschobenen Stellung der Aufnahmebereich mit dem Innenraum verbunden ist, oder
- der eine aus dem Innenraum und dem Aufnahmebereich mit einem Anschluss für eine Absaugleitung verbunden ist, der an dem Einsteckkörper oder dem Halteabschnitt vorgesehen ist, und vorzugsweise in der eingeschobenen Stellung der Aufnahmebereich mit dem Innenraum verbunden ist.

Gemäß dieser bevorzugten Ausführungsform weist der Einsteckkörper einen Innenraum auf, und wenn der Einsteckkörper an der Basis angebracht ist, ist dieser Innenraum mit dem Absaugraum des Saugfußes, der zwischen den Sauglippen sowie der Basis gebildet ist, verbunden. Dann kann gemäß der ersten Alternative dieser Ausführungsform der Aufnahmebereich mit einem Anschluss für eine Absaugleitung verbunden sein, wobei dieser Anschluss an dem Halteabschnitt vorgesehen ist und zudem der Aufnahmebereich und der Innenraum miteinander verbunden sind. Dann ist es möglich, dass eine Absaugleitung, die zu dem Schmutzflüssigkeitsbehälter geführt ist, an den Absauganschluss angeschlossen wird und dann über die Verbindung zwischen Einsteckkörper und Halteabschnitt hindurch der Absaugraum mit einem Unterdruck beaufschlagt und Schmutzflüssigkeit daraus abgesaugt wird.

Wenn der Einsteckkörper an der Basis des Saugfußes angebracht ist, ist es bei dieser bevorzugten Ausführungsform gemäß der zweiten Alternative vorgesehen, dass der Einsteckkörper auch den Absauganschluss aufweist. Auch in diesem Fall werden der Einsteckkörper und der Halteabschnitt für das Abführen von Schmutzflüssigkeit aus dem Absaugraum genutzt, wenn an den Absauganschluss eine Ablaufleistung angeschlossen wird.

In einer Alternative dieser bevorzugten Ausführungsform ist der Halteabschnitt an der Basis des Saugfußes angebracht und der Absaugraum ist dann mit dem Aufnahmebereich des Halteabschnitts verbunden. Dann ist gemäß der ersten Alternative der Innenraum des Einsteckkörpers mit einem daran vorgesehenen Absauganschluss verbunden, sodass wiederum durch die Verbindung zwischen Einsteckkörper und Halteabschnitt hindurch der Absaugraum mit einem Unterdruck beaufschlagt werden kann. Gemäß der zweiten Alternative weist dann der Halteabschnitt auch den Absauganschluss auf, der mit dem Aufnahmebereich verbunden ist. Auch bei diesem Aufbau wird durch die Verbindung zwischen Einsteckkörper und Halteabschnitt der Absaugraum mit Unterdruck beaufschlagt.

Es ist damit bei allen Alternativen dieser bevorzugten Ausführungsform nicht erforderlich, eine zusätzliche Verbindung zwischen Basis und Saugfußhalter vorzusehen, über die der Absaugraum mit Unterdruck beaufschlagt werden kann.

Insbesondere kann vorgesehen sein, dass der Einsteckkörper an der Basis angebracht ist und dessen Innenraum mit dem Absaugraum des Saugfußes verbunden ist, wobei der Einsteckkörper auch einen Absauganschluss aufweist, der ebenfalls mit dem Innenraum verbunden ist.

Bei der zuvor beschriebenen Ausführungsform ist es vorteilhaft, wenn der Absauganschluss an einer sich senkrecht zu der ersten Längsachse erstreckenden ersten Endfläche des Einsteckkörpers angeordnet ist. Dann ist der Absauganschluss gut für einen Benutzer zugänglich.

In einer weiteren bevorzugten Ausführungsform weist die Saugfußanordnung einen Absaugschlauch mit einem Anschlussstutzen auf, wobei der Absaugschlauch ausgebildet ist, mittelbar oder unmittelbar mit einem Schmutzflüssigkeitsbehälter einer Bodenreinigungsmaschine verbunden zu werden, wobei der Anschlussstutzen und der Absauganschluss ausgestaltet sind, dass der Anschlussstutzen in den Absauganschluss eingeschoben und im eingeschobenen Zustand gegenüber dem Absauganschluss um die erste Längsachse verschwenkt werden kann, wobei der Einsteckkörper am Absauganschluss einen sich durch eine Wandung des Einsteckkörpers erstreckenden ersten Schlitz aufweist, der einen in einer Radialebene zu der ersten Längsachse verlaufenden ersten Verriegelungsabschnitt aufweist, wobei der erste Schlitz zu der ersten Endfläche hin eine erste Öffnung aufweist, wobei der Halteabschnitt einen zweiten Schlitz aufweist, der hin zu einer zweiten Endfläche an dem Halteabschnitt geöffnet ist, wobei die zweite Endfläche in dieselbe Richtung wie die erste Endfläche weist, und der einen in einer Radialebene zu der zweiten Längsachse verlaufenden zweiten Verriegelungsabschnitt aufweist, wobei, wenn der Einsteckkörper in der eingeschobenen Stellung ist, der erste und der zweite Verriegelungsabschnitt überlappen, wobei der Anschlussstutzen ein sich radial davon wegerstreckendes Verriegelungselement aufweist, wobei die Schlitze derart ausgestaltet sind, dass das Verriegelungselement bei einem Einschieben des Anschlussstutzens in den Absauganschluss durch Verschieben und Verschwenken des Anschlussstutzens relativ zu dem Absauganschluss in den ersten und den zweiten Verriegelungsabschnitt verbracht werden kann.

Bei dieser bevorzugten Ausführungsform ist ein Absauganschluss an einer Endfläche des Einsteckkörpers vorgesehen, die senkrecht zu der ersten Längsachse verläuft, wobei der Absauganschluss und ein Anschlussstutzen des Absauganschlussschlauchs derart ausgebildet sind, dass der Anschlussstutzen in den Absauganschluss eingeschoben und dabei um die erste Längsachse verschwenkt werden kann. Weiterhin ist an dem Anschlussstutzen ein Verriegelungselement vorgesehen, das sich radial davon weg erstreckt.

Darüber hinaus weisen sowohl der Einsteckkörper als auch der Halteabschnitt jeweils einen Schlitz bzw. eine Nut auf, die sich von in dieselbe Richtung wie die erste Endfläche weisenden Enden des Einsteckkörpers bzw. des Halteabschnitts weg erstrecken und jeweils einen in einer Radialebene zu der ersten Längsachse verlaufenden Verriegelungsabschnitt umfassen. Diese Schlitze oder Nuten sind weiterhin so in dem Einsteckkörper und dem Halteabschnitt angebracht, dass sie dann, wenn der Einsteckkörper in der eingeschobenen Stellung in dem Halteabschnitt ist, so überlappen, dass beim Einschieben des Anschlussstutzens in den Absauganschluss ermöglicht wird, das Verriegelungselement entlang der Nuten bzw. der Schlitze in dem Einsteckkörper und dem Halteabschnitt zu bewegen, bis es die Verriegelungsabschnitte erreicht hat. Das Verriegelungselement ist dabei dann sowohl in dem Verriegelungsabschnitt des Einsteckkörpers als auch dem des Halteabschnitts angeordnet. In dieser Stellung verhindert es eine axiale Relativbewegung zwischen Einsteckkörper und Halteabschnitt, sodass, wenn der Anschlussstutzen in der beschriebenen Weise in den Absauganschluss eingesetzt ist, der Einsteckkörper und der Halteabschnitt gegeneinander axial verriegelt sind und nicht gelöst werden können.

Gemäß einem weiteren Aspekt der vorliegenden Erfindung wird die obige Aufgabe gelöst durch eine Bodenreinigungsmaschine mit einem Fahrwerk mit Rädern, sodass das Fahrwerk ausgestaltet ist, über eine zu reinigende Bodenfläche bewegt zu werden, und mit einem Maschinengehäuse, wobei an dem Maschinengehäuse ein Schrubbdeck mit Reinigungselementen zum Eingriff mit der zu reinigenden Bodenfläche vorgesehen ist, und wobei die Bodenreinigungsmaschine eine Saugfußanordnung gemäß einer der zuvor beschriebenen Ausführungsformen aufweist.

Hierbei ist es bevorzugt, wenn das Maschinenende der Saugfußanordnung an dem Schrubbdeck um eine Hochachse schwenkbar gehaltert ist, wobei die Hochachse, insbesondere wenn die Bodenreinigungsmaschine auf einer zu reinigenden Bodenfläche angeordnet ist, senkrecht zu der Kontaktebene verläuft.

Nachfolgend wird die vorliegende Erfindung anhand einer lediglich ein bevorzugtes Ausführungsbeispiel zeigenden Zeichnung erläutert, wobei
- Figur 1: ein Ausführungsbeispiel einer erfindungsgemäßen Bodenreinigungsmaschine mit einem Ausführungsbeispiel einer erfindungsgemäßen Saugfußanordnung zeigt
- Figur 2: eine perspektivische Darstellung des Ausführungsbeispiels einer erfindungsgemäßen Saugfußanordnung zusammen mit einem Schrubbdeck zeigt,
- Figur 3: eine perspektivische Darstellung eines Teils des Ausführungsbeispiels eine erfindungsgemäßen Saugfußanordnung aus Figur 2 zeigt,
- Figur 4: eine perspektivische Darstellung der Saugfußanbindung des Ausführungsbeispiels aus Figur 2 zeigt,
- Figur 5: eine perspektivische Darstellung des Saugfußhalters des Ausführungsbeispiels aus Figur 2 zeigt,
- Figur 6: eine perspektivische Darstellung eines Teils der Saugfußanordnung gemäß des Ausführungsbeispiels aus Figur 2 zeigt, wobei der Saugfußhalter nicht gezeigt ist,
- Figur 7: den Anschlussstutzen des Absauganschluss auch des Ausführungsbeispiels aus Figur 2 in einer perspektivischen Darstellung zeigt und
- Figur 8: eine perspektivische Darstellung von unten eines Teils des Saugfußes des Ausführungsbeispiels aus Figur 2 zeigt.

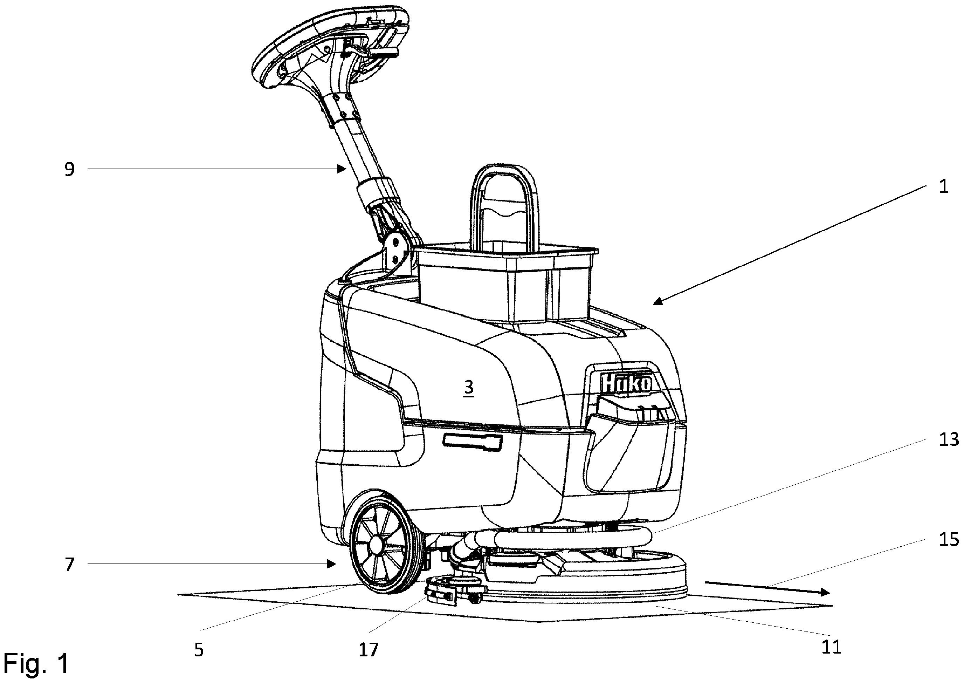

Figur 1 zeigt ein Ausführungsbeispiel einer erfindungsgemäßen Bodenreinigungsmaschine 1, wobei diese ein Maschinengehäuse 3 aufweist, in dem ein Schmutzflüssigkeitsbehälter sowie ein Reinigungsflüssigkeitsbehälter (beide nicht dargestellt) vorgesehen sind. Außerdem weist die Bodenreinigungsmaschine 1 ein in diesem Ausführungsbeispiel zwei Räder 5 beinhaltendes Fahrwerk 7 auf, mit dem die Bodenreinigungsmaschine 1 von einem Benutzer mithilfe eines an dem Maschinengehäuse 3 vorgesehenen Bedienholms 9 über eine zu reinigende Bodenfläche 11 bewegt werden kann.

Außerdem ist Figur 1 zu entnehmen, dass das Ausführungsbeispiel einer erfindungsgemäßen Bodenreinigungsmaschine ein Schrubbdeck 13 aufweist, das an dem Maschinengehäuse 3 gehaltert ist, wobei in der durch den Pfeil gekennzeichneten normalen Bewegungsrichtung 15 der Bodenreinigungsmaschine 1 im Betrieb gesehen hinter dem Schrubbdeck 13 ein Ausführungsbeispiel einer erfindungsgemäßen Saugfußanordnung 17 vorgesehen ist.

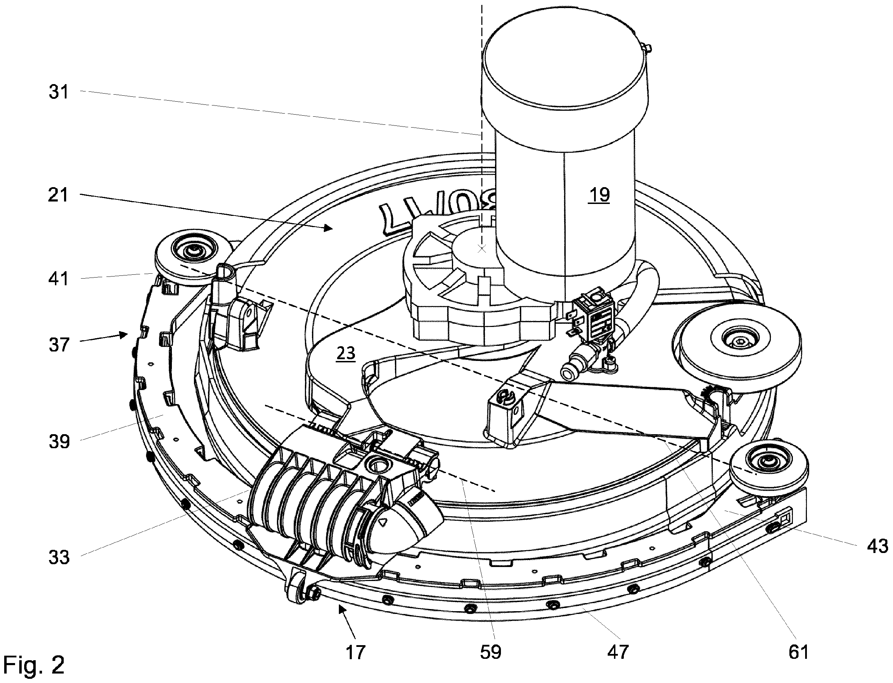

Die Kombination aus dem Schrubbdeck 13 sowie der Saugfußanordnung 17 ist in Figur 2 in einer perspektivischen Darstellung dargestellt. Das Schrubbdeck 13 weist über einen Motor 19 angetriebene Bürstenelemente (nicht dargestellt) auf, die mit der zu reinigenden Bodenfläche 11 eingreifen, wenn das Schrubbdeck 13 auf der zu reinigenden Bodenfläche 11 aufliegt. An dem Gehäuse 21 des Schrubbdecks 13 ist das nachfolgend im Detail beschriebene Ausführungsbeispiel einer erfindungsgemäßen Saugfußanordnung 17 angebracht.

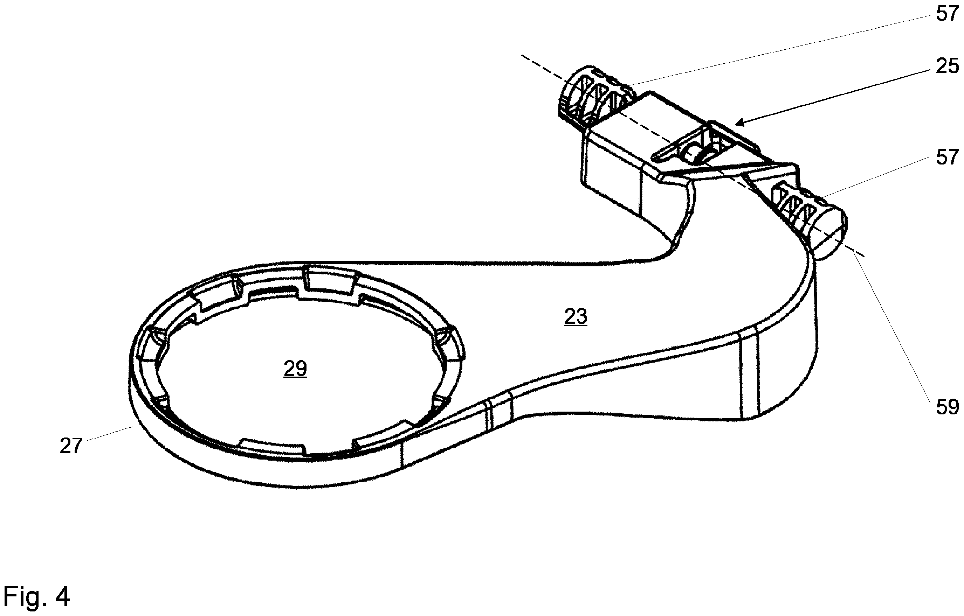

Das Ausführungsbeispiel einer erfindungsgemäßen Saugfußanordnung 17 weist zunächst eine Saugfußanbindung 23 auf, die auch in Figur 4 dargestellt ist und die sich zwischen einem Kupplungsende 25 und einem Maschinenende 27 erstreckt. In dem hier beschriebenen Ausführungsbeispiel weist die Saugfußanbindung 23 an dem Maschinenende 27 eine Aufnahmeöffnung 29 auf, die derart ausgestaltet ist, dass sie schwenkbar um eine Hochachse 31 an einer Aufnahme (nicht dargestellt) des Gehäuses 21 des Schrubbdecks 13 gehaltert werden kann, wobei die Hochachse 31, wenn die Bodenreinigungsmaschine 1 in Betrieb ist und das Schrubbdeck 13 auf der zu reinigenden Bodenfläche 11 aufliegt, im Wesentlichen senkrecht zu der zu reinigenden Bodenfläche 11 verläuft.

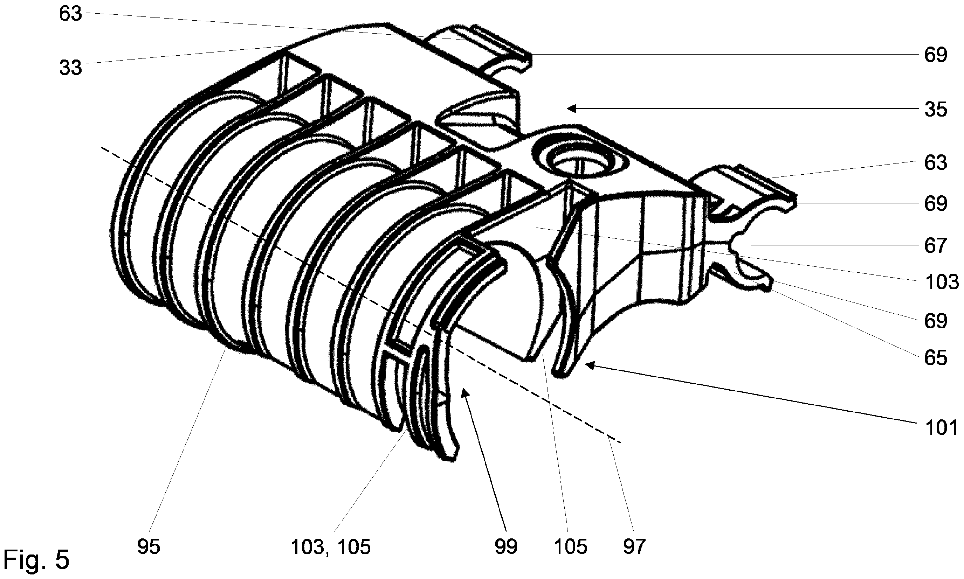

Wie aus den Figuren 2 und 5 hervorgeht, weist die Saugfußanordnung 17 ferner einen Saugfußhalter 33 auf, der im Detail in Figur 5 dargestellt ist und der einen Kupplungsabschnitt 35 aufweist, der in der nachfolgend beschriebenen Weise schwenkbar mit dem Kupplungsende 25 der Saugfußanbindung 23 lösbar verbunden ist.

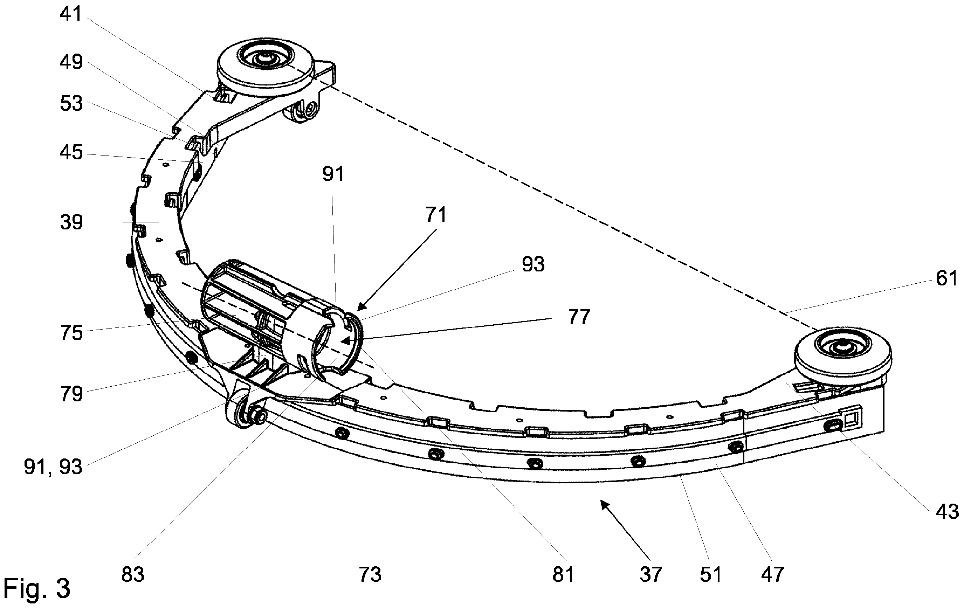

Schließlich weist die Saugfußanordnung 17 einen Saugfuß 37 auf, der an dem Saugfußhalter 33 in einer nachfolgend noch näher beschriebenen Weise lösbar angebracht ist, wobei der Saugfuß 37, wie den Figuren 2 und 3 zu entnehmen ist, eine Basis 39 aufweist, die gebogen zwischen einem ersten Ende 41 und einem zweiten Ende 43 verläuft. An der Basis 39 sind eine vorderen Sauglippe 45 sowie eine hintere Sauglippe 47 angebracht, die sich beide von der Basis 39 im Wesentlichen parallel zueinander weg erstrecken und außerdem jeweils entlang der Basis 39 verlaufen. Wenn die Saugfußanordnung 17 und damit der Saugfuß 39 auf einer zu reinigenden Bodenfläche 11 aufliegen, weisen die Sauglippen 45, 47 von der Basis 39 hin zu der zu reinigenden Bodenfläche 11 und liegen beide mit deren Unterkante 49, 51 auf der zu reinigenden Bodenfläche 11 auf, da die Unterkanten 49, 51 in einer gemeinsamen Kontaktebene angeordnet sind. Außerdem ist zu erkennen, dass die vordere Sauglippe 45 geschlitzt ausgebildet ist, d. h. sie hat von der Unterkante 49 hin zu der Basis 39 verlaufenden Schlitze 53, durch die Schmutzflüssigkeit, die sich auf der zu reinigenden Bodenfläche 11 befindet, in den zwischen den Dichtlippen 45, 47 sowie der Basis 39 gebildeten Absaugraum 55 gelangen kann. Die Dichtlippen 45, 47 sowie die Basis 39 begrenzen also den Absaugraum 55 .

Nachfolgend wird, insbesondere unter Bezugnahme auf die Figuren 4 und 5, die Verbindung zwischen dem Kupplungsende 25 der Saugfußanbindung 23 und dem Kupplungsabschnitt 35 des Saugfußhalter 33 beschrieben.

Wie insbesondere Figur 4 zu entnehmen ist, weist das Kupplungsende 25 der Saugfußanbindung 23 zwei Zapfenabschnitte 57 auf, die sich entlang einer gemeinsamen Zapfenachse 59 erstrecken, die parallel zu der Kontaktebene verläuft, in der sich die Unterkanten 49, 51 der Dichtlippen 45, 47 erstrecken. Außerdem ist die Zapfenachse 59 in diesem Ausführungsbeispiel parallel zu einer Verbindungslinie 61 angeordnet, die sich in der Kontaktebene zwischen den Enden 41, 43 der Basis 39 des Saugfußes 37 erstreckt. Weiter ist Figur 4 zu entnehmen, dass die Zapfenabschnitte 57 Rippen aufweisen, die im Querschnitt gesehen kreisförmig ausgebildet sind. Dadurch hat die Umhüllende der Zapfenabschnitte 57 ebenfalls einen kreisförmigen Querschnitt.

An dem Kupplungsabschnitt 35 der Saugfußhalterung 33 sind erste Klemmelemente 63 und den ersten Klemmelementen 63 gegenüberliegend zweite Klemmelemente 65 vorgesehen, wobei die Paare von Klemmelemente 63, 65 parallel zueinander angeordnet sind. Die Klemmelemente 63, 65 sind derart ausgebildet, dass sie jeweils von dem gegenüberliegenden Klemmelement aus gesehen konkav verlaufen, sodass zwischen den Klemmelementen 63, 65 ein Aufnahmeabschnitt 67 ausgebildet ist und sich daran ein freies Ende 69 anschließt. Aufgrund des konkaven Verlaufs der Klemmelemente 63, 65 ist der Abstand zwischen diesen im Bereich der freien Enden 69 kleiner als im Bereich des Aufnahmeabschnitts 67. Durch diesen Aufbau der Klemmelemente 63,65 sowie durch die geeignete Wahl des Durchmessers der Zapfenabschnitte 57 ist es möglich, dass die Zapfenabschnitte 57 von den freien Enden 69 der Klemmelemente 63 her in die Aufnahmeabschnitte 67 eingeschoben werden können, wobei dabei die Klemmelemente 63, 65 leicht elastisch verformt werden. Genauso können die Zapfenabschnitte 57 aus den Aufnahmeabschnitten 67 herausgedrückt werden, wenn eine hinreichend große Kraft senkrecht zu der Zapfenachse 59 auf die Saugfußhalterung 33 bzw. den damit verbundenen Saugfuß 37 ausgeübt wird. Durch diese Rastverbindung zwischen dem Saugfußhalter 33 und der Saugfußanbindung 23 wird somit in einfacher Weise ein Überlastschutz realisiert, sodass sich der Saugfuß 37 letztlich von dem Maschinengehäuse 3 der Bodenreinigungsmaschine 1 lösen kann, wenn er mit einem Hindernis in Kontakt kommt, sodass der Saugfuß 37 ausweichen und eine Beschädigung des Saugfußes 37 vermieden werden kann.

Da ferner der Querschnitt des Zapfenabschnittes 57 kreisförmig ausgestaltet ist, kann der Kupplungsabschnitt 35 und damit der Saugfußhalter 33 um die Zapfenachse 59 gegenüber der Saugfußanbindung 23 verschwenkt werden.

Nachfolgend wird nun der Aufbau der Verbindung zwischen dem Saugfußhalter 33 und der Basis 39 des Saugfußes 37 beschrieben.

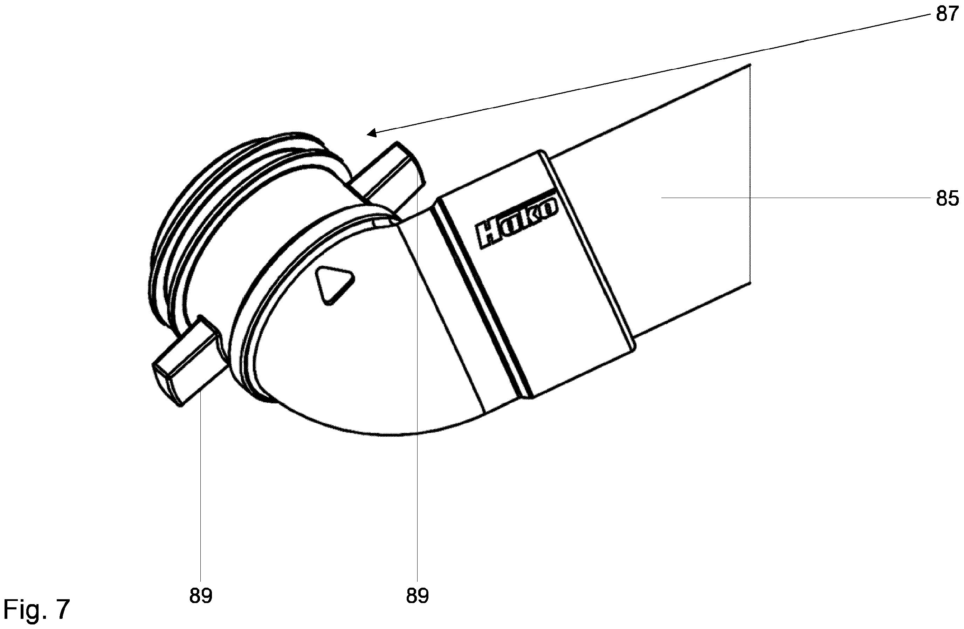

Wie Figur 3 zu entnehmen ist, ist an der Basis 39 des Saugfußes 37 ein Einsteckkörper 71 angebracht, der sich entlang einer ersten Längsachse 73 erstreckt, wobei die erste Längsachse 73 parallel zu der Kontaktebene verläuft, die durch die Unterkanten 49, 51 der Dichtlippen 45, 47 definiert ist. Die Einhüllende des Einsteckkörpers 71 hat senkrecht zu der ersten Längsachse 73 gesehen einen kreisförmigen Querschnitt, da der Einsteckkörper 71 sich parallel zu der Längsachse erstreckende Rippen 75 aufweist, die sich bis zu der Einhüllenden erstrecken. Der Einsteckkörper 71 ist als Hohlkörper ausgebildet und weist damit einen Innenraum 77 auf, wobei dieser Innenraum 77 über ein Verbindungsstück 79 mit dem Absaugraum 55 verbunden ist, der von der Basis 39 und den Dichtlippen 45, 47 begrenzt wird. Darüber hinaus weist der Einsteckkörper 71 an einer ersten Endfläche 81 einen Absauganschluss 83 auf, der derart ausgebildet ist, dass ein an einem Absaugschlauch 85 vorgesehener Anschlussstutzen 87 in diesem eingeschoben und um die erste Längsachse 73 verschwenkt werden kann. Wie weiter Figur 7 zu entnehmen ist, weist der Anschlussstutzen 87 des Absaugschlauchs 85 zwei sich radial von dem Anschlussstutzen 87 weg erstreckende Verriegelungselemente 89 auf, deren Funktion nachfolgend noch beschrieben werden wird.

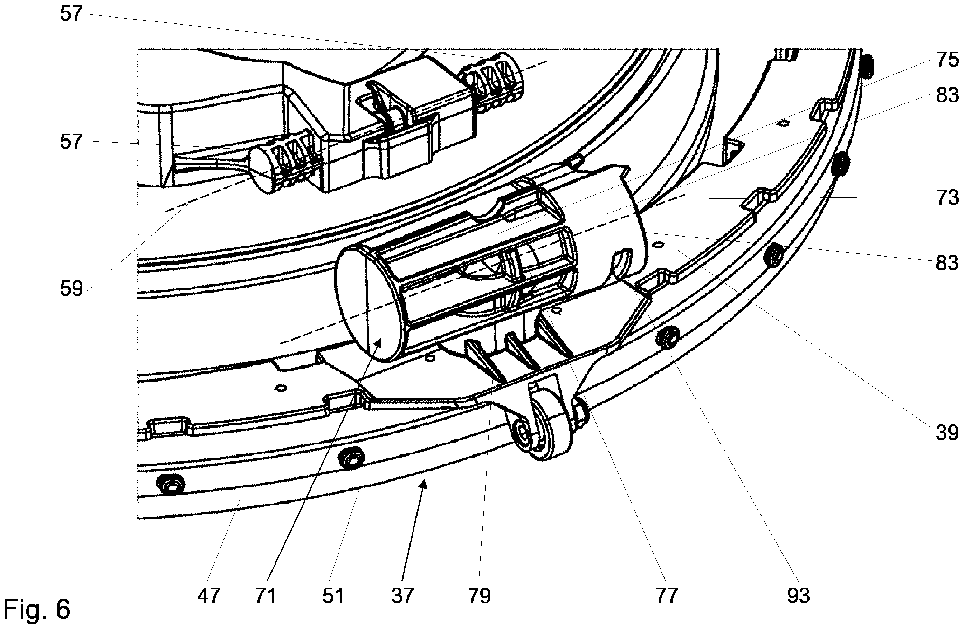

Den Figuren 3 und 6 ist zu entnehmen, dass der Einsteckkörper 71 im Bereich des Absauganschlusses 83 erste Schlitze 91 aufweist, die zu der Endfläche 81 des Einsteckkörper 71 hin geöffnet sind, und die in einer senkrecht zu der ersten Längsachse 73 verlaufenden Radialebene sich erstreckende erste Verriegelungsabschnitte 93 aufweisen. Wenn der Anschlussstutzen 87 in den Absauganschluss 83 eingeschoben wird, kann dies in der Weise erfolgen, dass die Verriegelungselemente 89 in die ersten Schlitze 91 eingeschoben und der Anschlussstutzen 87 nach der Einschubewegung entlang der ersten Längsachse 73 derart verschwenkt wird, dass sich die Verriegelungselemente 89 in die ersten Verriegelungsabschnitte 93 bewegen. Dabei haben die Verriegelungselemente 89 in radialer Richtung eine solche Länge, dass sie sich durch die ersten Schlitze 91 hindurch nach außen über die Außenseite des Einsteckkörpers 71 hinaus erstrecken.

Weiterhin ist Figur 5 zu entnehmen, dass der Saugfußhalter 33 einen Halteabschnitt 95 aufweist, in dem ein sich entlang einer zweiten Längsachse 97 erstreckender Aufnahmebereich 99 ausgebildet ist, dessen Querschnitt senkrecht zu der zweiten Längsachse 97 teilkreisförmig ausgebildet ist, wobei sich die Wandung um den Aufnahmebereich 99 im Querschnitt gesehen über mehr als 180° erstreckt. Der Durchmesser des Aufnahmebereichs 99 ist dabei so gewählt, dass der Einsteckkörper 71 so darin aufgenommen werden kann, dass er um die erste Längsachse 73 bzw. die zweite Längsachse 97 gegenüber dem Halteabschnitt 95 bzw. dem Saugfußhalter 33 verschwenkt werden kann.

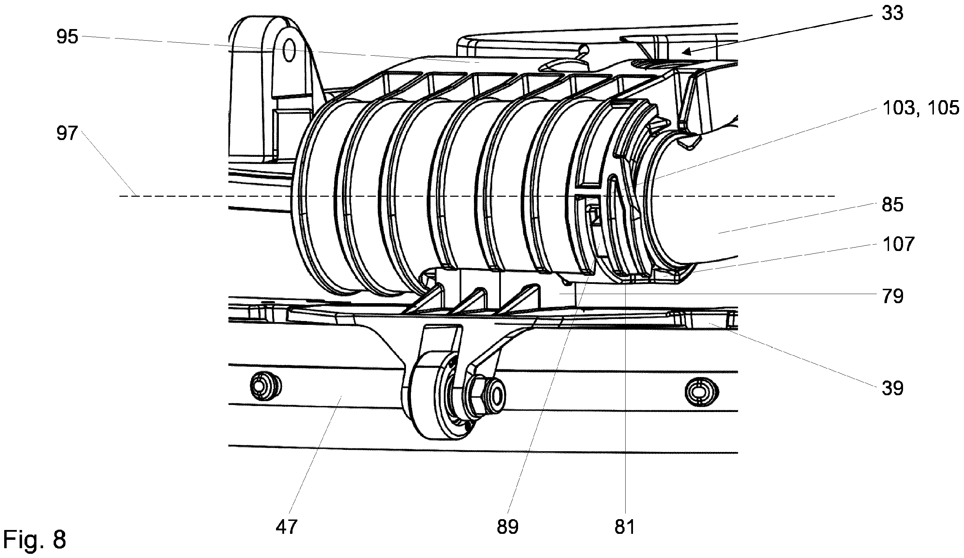

Schließlich ist in Figur 5 sowie in Figur 8 zu erkennen, dass der Halteabschnitt 95 ausgehend von einer zweiten Endfläche 101, die in dieselbe Richtung weist, wie die erste Endfläche 81, zweite Schlitze 103 aufweist, die ebenfalls in einer sich senkrecht zu der zweiten Längsachse 97 erstreckenden Radialebene verlaufende zweite Verriegelungsabschnitte 105 aufweisen.

Wenn, wie in den Figuren 2 und 8 gezeigt, der Einsteckkörper 71 entlang der ersten Längsachse 73 bzw. der zweiten Längsachse 97 vollständig in den Aufnahmebereich 99 eingeschoben ist, sodass der Einsteckkörper 73 in der eingeschobenen Stellung ist, überlappen die ersten und zweiten Schlitze 91, 103 und insbesondere die ersten und zweiten Verriegelungsabschnitte 93, 105.

Diese Anordnung der ersten und zweiten Schlitze 91, 103 ermöglicht eine Kopplung des Einsteckkörpers 71 mit dem Halteabschnitt 95. Wenn der Einsteckkörper 71 vollständig bis zu einem Anschlag entlang der zweiten Längsachse 97 in den Aufnahmebereich 99 eingeschoben ist, wird der Absaugschlauch 85 mit dem Anschlussstutzen 87 in den Absauganschluss 83 bis zu einem Anschlag eingesetzt, wobei der Anschlussstutzen 87 dabei dann so verschwenkt wird, dass sich die Verriegelungselemente 89 in die ersten und zweiten Verriegelungsabschnitte 93, 105 bewegen. Damit wird durch das Verbinden des Absaugschlauchs 85 mit dem Absauganschluss 83 in dem Einsteckkörper 71 gleichzeitig die Verbindung zwischen dem Einsteckkörper 71 und dem Halteabschnitt 95 verriegelt, sodass der Einsteckkörper 71 nicht mehr entlang der zweiten Längsachse 97 aus dem Halteabschnitt 95 heraus bewegt werden kann. Darüber hinaus wird die Verbindung zwischen der Basis 39 des Saugfußes 37 und dem Saugfußhalter 33 auch dazu verwendet, die Fluidverbindung zwischen dem Absaugschlauch 85 und dem Absaugraum 55 in dem Saugfuß 37 herzustellen.

Bei dem hier beschriebenen Ausführungsbeispiel ist der Einsteckkörper 71 an der Basis 39 des Saugfußes 37 angebracht, während der Halteabschnitt 95 an dem Saugfußhalter 33 vorgesehen ist. Es ist aber auch denkbar, dass der Saugfußhalter 33 einen Einsteckkörper aufweist, der dann in einem Aufnahmebereich an der Basis 39 des Saugfußes 37 aufgenommen ist. In einer solchen Alternative ist dann der Aufnahmebereich des Halteabschnitts mit dem Absaugraum verbunden und entweder an dem Halteabschnitt oder an dem Einsteckkörper kann dann ein Absauganschluss für den Absaugschlauch 85 vorgesehen sein.

Darüber hinaus ist noch einmal darauf hinzuweisen, dass das Konzept zur Halterung eines Saugfußes, bei dem ein Einsteckkörper 71 in den Aufnahmebereich 99 eines Halteabschnitts 95 eingeschoben wird, selbstständig und erfinderisch und nicht darauf beschränkt ist, zusammen mit den übrigen Aspekten des hier beschriebenen Ausführungsbeispiels einer Saugfußanordnung verwendet zu werden. Vielmehr kann dieses Konzept auch in anderen Aufbauten von Saugfußanordnungen dazu verwendet werden, den Saugfuß 37 an einer Halterung lösbar und verschwenkbar anzubringen.

Darüber hinaus ist die Verbindung zwischen dem der Basis 39 und dem Saugfußhalter 33 so ausgestaltet, dass die Basis 39 gegenüber dem Saugfußhalter 33 um die zweite Längsachse 97, die parallel zu der Zapfenachse 59 verläuft, und damit ebenfalls parallel zu der Kontaktebene, schwenkbar.

In Figur 8 ist außerdem zu erkennen, dass an dem Einsteckkörper 71 ein Anschlag 107 vorgesehen ist, mit dem der Halteabschnitt 95 zur Anlage kommen kann, wodurch der Schwenkbereich, über den der Saugfuß 37 gegenüber dem Saugfußhalter 33 um die zweite Längsachse 97 verschwenkt werden kann, begrenzt wird. Hier ist der Anschlag 107 an dem Verbindungsstück 79 ausgebildet und durch den Anschlag 107 wird erreicht, dass dann, wenn das vordere Ende der Bodenreinigungsmaschine 1 angehoben wird, der Saugfuß 37, dessen Schwerpunkt in Bewegungsrichtung 15 gesehen vor der Schwenkachse liegt, die durch die erste und zweite Längsachse 73, 97 definiert ist, daran gehindert wird, in so großem Umfang hin zu der zu reinigenden Bodenfläche 11 zu schwenken, dass er mit dieser auch im angehobenen Zustand der Bodenreinigungsmaschine 1 in Kontakt kommt.

Bei der Saugfußanordnung 17 gemäß dem zuvor beschriebenen Ausführungsbeispiel kann der Saugfuß 37 in der im folgenden beschriebenen Weise an der Bodenreinigungsmaschine 1 angebracht werden bzw. der Saugfuß 37 kann in einfacher Weise von der Bodenreinigungsmaschine 1 zu Wartungs- und Reinigungszwecken gelöst werden.

Zur Montage des Saugfußes 37 muss der daran vorgesehene Einsteckkörper 71 in der schon beschriebenen Weise in den Aufnahmebereich 99 des Saugfußhalters 33 entlang der zweiten Längsachse 97 eingeschoben werden, wobei dies einfach möglich ist, wenn die Saugfußanbindung 23 um die Hochachse 31 so verschwenkt wird, dass der Halteabschnitt 95 des Saugfußhalter 33 im Seitenbereich des Maschinengehäuses 3 der Bodenreinigungsmaschine 1 angeordnet ist. Wenn der Einsteckkörper 71 in der eingeschobenen Stellung in dem Aufnahmebereich 99 des Saugfußhalter 33 angeordnet ist, wird der Anschlussstutzen 87 des Absaugschlauchs 85 in der schon beschriebenen Weise in den Absauganschluss 83 in dem Einsteckkörper 71 eingesetzt, wobei dadurch auch der Einsteckkörper 71 aufgrund des Eingriffs der Verriegelungselemente 89 mit den Verriegelungsabschnitten 93, 105 in den Schlitzen 91, 103 gegenüber dem Saugfußhalter 33 axial verriegelt wird. Dabei sind die Schlitze 91, 103 so ausgestaltet, dass die Verriegelungselemente 89 im verriegelten Zustand im Wesentlichen horizontal ausgerichtet sind. Bei Zugkräften, die im Saugschlauch 85 wirken können, wird so ein Herausziehen des Anschlussstutzens 87 aus dem Absauganschluss 83 sicher vermieden.

Bei dem hier beschriebenen Ausführungsbeispiel ist der Absaugschlauch 85 in einer Schleife um den Motor 19 des Schrubbdecks 13 herum geführt und dessen anderes Ende führt zu dem Schmutzflüssigkeitsbehälter der Bodenreinigungsmaschine 1.

Sollte während des Betriebs der Bodenreinigungsmaschine 1, bei dem diese über eine zu reinigende Bodenfläche 11 bewegt wird, der Saugfuß 37 mit einem Hindernis in Kontakt kommen, sodass Kräfte entlang der Bewegungsrichtung 15 auf ihn ausgeübt werden, können sich die Klemmelemente 63, 65 von den Zapfenabschnitten 57 lösen, und der Saugfuß 37 läuft nicht Gefahr, beschädigt zu werden. Insbesondere wird also durch den Rasteingriff der Klemmelemente 63, 65 mit dem Zapfenabschnitten 57 ein Überlastschutz gebildet.

Da der Saugfuß 37 selbst um die erste bzw. die zweite Längsachse 73, 97 gegenüber dem Saugfußhalter 33 schwenkbar gehaltert ist und zum anderen der Saugfußhalter 33 um die Zapfenachse 59 schwenkbar an der Saugfußanbindung 23 gehaltert ist, kann der Saugfuß 37 abhängig vom Verschleiß der Reinigungselemente in dem Schrubbdeck 13 unterschiedliche vertikale Positionen relativ zu dem Gehäuse 21 des Schrubbdecks 13 einnehmen, wobei in jeder dieser Positionen die Kontaktebene parallel zu der zu reinigenden Bodenfläche 11 ausgerichtet sein kann.

### Bezugszeichenliste:

- 1: Bodenreinigungsmaschine
- 3: Maschinengehäuses
- 5: Rad
- 7: Fahrwerk
- 9: Bedienholm
- 11: zu reinigende Bodenfläche
- 13: Schrubbdeck
- 15: Bewegungsrichtung
- 17: Saugfußanordnung
- 19: Motor (Schrubbdeck)
- 21: Gehäuse (Schrubbdeck)
- 23: Saugfußanbindung
- 25: Kupplungsende
- 27: Maschinenende
- 29: Aufnahmeöffnung
- 31: Hochachse
- 33: Saugfußhalter
- 35: Kupplungsabschnitt
- 37: Saugfuß
- 39: Basis
- 41: erstes Ende - Saugfuß
- 43: zweites Ende - Saugfuß
- 45: vordere Dichtlippe
- 47: hintere Dichtlippe
- 49: Unterkante - vordere Dichtlippe
- 51: Unterkante -hintere Dichtlippe
- 53: Schlitz
- 55: Absaugraum
- 57: Zapfenabschnitt
- 59: Zapfenachse
- 61: Verbindungslinie
- 63: erstes Klemmelement
- 65: zweites Klemmelement
- 67: Aufnahmeabschnitt
- 69: freies Ende - Klemmelement
- 71: Einsteckkörper
- 73: erste Längsachse
- 75: Rippe
- 77: Innenraum
- 79: Verbindungsstück
- 81: erste Endfläche
- 83: Absauganschluss
- 85: Absaugschlauch
- 87: Anschlussstutzen
- 89: Verriegelungselement
- 91: erster Schlitz
- 93: zweiter Verriegelungsabschnitt
- 95: Halteabschnitt
- 97: zweite Längsachse
- 99: Aufnahmebereich
- 101: zweite Endfläche
- 103: zweiter Schlitz
- 105: zweiter Verriegelungsabschnitt
- 107: Anschlag

## Patentansprüche

1. Saugfußanordnung zur Anbringung an einer Bodenreinigungsmaschine (1) mit einem Saugfuß (37), der eine Basis (39) aufweist, an der eine vordere Sauglippe (45) und eine hintere Sauglippe (47) angebracht sind, die sich, vorzugsweise parallel zueinander, von der Basis (39) weg erstrecken und die so voneinander beabstandet sind, dass von den Sauglippen (45, 47) und der Basis (39) ein Absaugraum (55) begrenzt wird,
wobei sich die von der Basis (39) entfernten Kanten (49, 51) der Sauglippen (45, 47) in einer Kontaktebene erstrecken und ausgebildet sind, auf einer zu reinigenden Bodenfläche (11) aufzuliegen,
mit einem mit der Basis (39) verbundenen Saugfußhalter (33), der einen Kupplungsabschnitt (35) aufweist,
mit einer Saugfußanbindung (23), die sich zwischen einem Kupplungsende (25) und einem Maschinenende (27) erstreckt,
wobei das Maschinenende (27) ausgebildet ist, an einer Bodenreinigungsmaschine (1), vorzugsweise um eine Hochachse (31) schwenkbar, angebracht zu sein,
**dadurch gekennzeichnet, dass** einer aus dem Kupplungsabschnitt (35) und dem Kupplungsende (25) einen Zapfenabschnitt (57) aufweist, der sich entlang einer Zapfenachse (59) erstreckt, die parallel zu der Kontaktebene verläuft,
wobei der andere aus dem Kupplungsabschnitt (35) und dem Kupplungsende (25) ein erstes und ein zweites Klemmelement (63, 65) aufweist, die einander gegenüberliegen, freie Enden (69) aufweisen und derart konkav verlaufen, dass ein Aufnahmeabschnitt (67) zwischen den Klemmelementen (63, 65) gebildet ist, in dem der Zapfenabschnitt (57) aufgenommen ist,
wobei der Abstand der freien Enden (69) der Klemmelemente (63, 65) voneinander geringer ist als der Abstand der Klemmelemente (63, 65) im Aufnahmeabschnitt (67) und
wobei eines oder beide Klemmelemente (63, 65) derart elastisch verformbar sind, dass der Zapfenabschnitt (57) senkrecht zu dessen Erstreckungsrichtung über die freien Enden (69) aus dem Aufnahmeabschnitt (67) heraus und in diesen hinein bewegt werden kann.

2. Saugfußanordnung nach Anspruch 1, wobei der Zapfenabschnitt (57) und der Aufnahmeabschnitt (67) derart ausgestaltet sind, dass der Zapfenabschnitt (57) gegenüber den Klemmelementen (63, 65) um die Zapfenachse (59) verschwenkbar ist.

3. Saugfußanordnung nach Anspruch 1 oder 2, wobei der Zapfenabschnitt (57) an dem Kupplungsende (25) vorgesehen ist und das erste und das zweite Klemmelement (63, 65) an dem Kupplungsabschnitt (35) vorgesehen sind.

4. Saugfußanordnung nach einem oder mehreren der Ansprüche 1 bis 3, wobei sich die Basis (39) von einem ersten zu einem zweiten Ende (41, 43) erstreckt und
wobei die Zapfenachse (59) parallel zu einer sich parallel zu der Kontaktebene erstreckenden Verbindungslinie (61) zwischen den Enden (41,43) der Basis (39) verläuft.

5. Saugfußanordnung nach einem oder mehreren der Ansprüche 1 bis 4, wobei an einem aus der Basis (39) und dem Saugfußhalter (33) ein Einsteckkörper (71) angebracht ist, der sich entlang einer ersten Längsachse (73) erstreckt, und
wobei an dem anderen aus der Basis (39) und dem Saugfußhalter (33) ein Halteabschnitt (95) vorgesehen ist, in dem ein Aufnahmebereich (99) ausgebildet ist,
wobei der Einsteckkörper (71) in dem Aufnahmebereich (99) aufgenommen und in einer eingeschobenen Stellung ist,
wobei der Aufnahmebereich (99) so ausgestaltet ist, dass er sich entlang einer zweiten Längsachse (97) erstreckt,
wobei die zweite Längsachse (97) parallel zu der Kontaktebene verläuft und
wobei der Einsteckkörper (71) und der Aufnahmebereich (99) derart ausgestaltet sind, dass der Einsteckkörper (71) zur Aufnahme in den Aufnahmebereich (99) entlang der zweiten Längsachse (97) in den Aufnahmebereich (99) bis zu der eingeschobenen Stellung einschiebbar ist, wobei die erste und die zweite Längsachse (73, 97) zusammenfallen und in der eingeschobenen Stellung der Einsteckkörper (71) um die zweite Längsachse (97) gegenüber dem Halteabschnitt (95) verschwenkbar ist.

6. Saugfußanordnung nach Anspruch 5, wobei die zweite Längsachse (97) und die Zapfenachse (59) beabstandet und parallel zueinander sind.

7. Saugfußanordnung nach Anspruch 5 oder 6, wobei der Einsteckkörper (71) einen Innenraum (77) aufweist,
wobei einer aus dem Innenraum (77) und dem Aufnahmebereich (99) mit dem Absaugraum (55) verbunden ist und wobei
der andere aus dem Innenraum (77) und dem Aufnahmebereich (99) mit einem Absauganschluss (83) für einen Absaugschlauch (85) verbunden ist, der an dem Einsteckkörper (71) oder dem Halteabschnitt (95) vorgesehen ist, und in der eingeschobenen Stellung der Aufnahmebereich (99) mit dem Innenraum (77) verbunden ist,
oder
der eine aus dem Innenraum (77) und dem Aufnahmebereich (99) mit einem Absauganschluss (83) für einen Absaugschlauch (85) verbunden ist, der an dem Einsteckkörper (71) oder dem Halteabschnitt (95) vorgesehen ist, und vorzugsweise in der eingeschobenen Stellung der Aufnahmebereich (95) mit dem Innenraum (77) verbunden ist.

8. Saugfußanordnung nach einem oder mehreren der Ansprüche 5 bis 7, wobei der Einsteckkörper (71) an der Basis (39) vorgesehen ist und der Innenraum (77) mit dem Absaugraum (55) verbunden ist und
wobei der Einsteckkörper (71) einen Absauganschluss (83) aufweist, der mit dem Innenraum (77) verbunden ist.

9. Saugfußanordnung nach Anspruch 8, wobei der Absauganschluss (83) an einer sich senkrecht zu der ersten Längsachse (73) erstreckenden ersten Endfläche (81) des Einsteckkörpers (71) angeordnet ist.

10. Saugfußanordnung nach Anspruch 9, mit einem Absaugschlauch (85) mit einem Anschlussstutzen (87),
wobei der Absaugschlauch (85) ausgebildet ist, mittelbar oder unmittelbar mit einem Schmutzflüssigkeitsbehälter einer Bodenreinigungsmaschine (1) verbunden zu werden,
wobei der Anschlussstutzen (87) und der Absauganschluss (83) ausgestaltet sind, dass der Anschlussstutzen (87) in den Absauganschluss (83) eingeschoben und im eingeschobenen Zustand gegenüber dem Absauganschluss (83) um die erste Längsachse (73) verschwenkt werden kann,
wobei der Einsteckkörper (71) am Absauganschluss (83) einen sich durch eine Wandung des Einsteckkörpers (71) erstreckenden ersten Schlitz (91) aufweist, der einen in einer Radialebene zu der ersten Längsachse (73) verlaufenden ersten Verriegelungsabschnitt (93) aufweist,
wobei der erste Schlitz (91) zu der ersten Endfläche (81) hin eine erste Öffnung aufweist,
wobei der Halteabschnitt (95) einen zweiten Schlitz (103) aufweist, der hin zu einer zweiten Endfläche (101) an dem Halteabschnitt (95) geöffnet ist, wobei die zweite Endfläche (101) in dieselbe Richtung wie die erste Endfläche (81) weist, und der einen in einer Radialebene zu der zweiten Längsachse (97) verlaufenden zweiten Verriegelungsabschnitt (105) aufweist,
wobei, wenn der Einsteckkörper (71) in der eingeschobenen Stellung ist, der erste und der zweite Verriegelungsabschnitt (93, 105) überlappen,
wobei der Anschlussstutzen (87) ein sich radial davon wegerstreckendes Verriegelungselement (89) aufweist und
wobei die Schlitze (91, 103) derart ausgestaltet sind, dass das Verriegelungselement (89) bei einem Einschieben des Anschlussstutzens (87) in den Absauganschluss (83) durch Verschieben und Verschwenken des Anschlussstutzens (87) relativ zu dem Absauganschluss (83) in den ersten und den zweiten Verriegelungsabschnitt (93, 105) verbracht werden kann.

11. Bodenreinigungsmaschine mit einem Fahrwerk (7) mit Rädern (5), sodass das Fahrwerk (7) ausgestaltet ist, über eine zu reinigende Bodenfläche (11) bewegt zu werden, und mit einem Maschinengehäuse (3),
wobei an dem Maschinengehäuse (3) ein Schrubbdeck (13) mit Reinigungselementen zum Eingriff mit der zu reinigenden Bodenfläche (11) vorgesehen ist, und
wobei die Bodenreinigungsmaschine eine Saugfußanordnung (17) nach einem der Ansprüche 1 bis 10 aufweist.

12. Bodenreinigungsmaschine nach Anspruch 11, wobei das Maschinenende (27) an dem Maschinengehäuses (3) oder dem Schrubbdeck (13) um eine Hochachse (31) schwenkbar gehaltert ist, wobei die Hochachse (31), insbesondere wenn die Bodenreinigungsmaschine (1) auf einer zu reinigenden Bodenfläche (11) angeordnet ist, senkrecht zu der Kontaktebene verläuft.

## Claims

1. A suction foot assembly for attachment to a floor cleaning machine (1), having a suction foot (37) which has a base (39) to which a front suction lip (45) and a rear suction lip (47) are attached, which extend away from the base (39), preferably parallel to one another, and which are spaced apart from one another such that a suction space (55) is delimited by the suction lips (45, 47) and the base (39),
wherein the edges (49, 51) of the suction lips (45, 47) that are positioned away from the base (39) extend in a contact plane and are designed to rest on the floor surface (11) to be cleaned,
having a suction foot holder (33) connected to the base (39), said suction foot holder having a coupling section (35),
having a suction foot connection (23) extending between a coupling end (25) and a machine end (27),
wherein the machine end (27) is designed to be attached to a floor cleaning machine (1), preferably pivotable about a vertical axis (31), **characterized in that** one of the coupling section (35) and the coupling end (25) has a pin section (57) which extends along a pin axis (59) which runs parallel to the contact plane,
wherein the other of the coupling section (35) and the coupling end (25) has a first and a second clamping element (63, 65) which are opposite one another, have free ends (69) and extend concavely such that a receiving section (67) is formed between the clamping elements (63, 65) in which the pin section (57) is received,
wherein the distance between the free ends (69) of the clamping elements (63, 65) is smaller than the distance between the clamping elements (63, 65) in the receiving section (67), and
wherein one or both clamping elements (63, 65) are elastically deformable such that the pin section (57) can be moved perpendicular to its direction of extension over the free ends (69) out of and into the receiving section (67).

2. The suction foot assembly according to claim 1, wherein the pin section (57) and the receiving section (67) are designed such that the pin section (57) can be pivoted about the pin axis (59) relative to the clamping elements (63, 65).

3. The suction foot assembly according to claim 1 or 2, wherein the pin section (57) is provided on the coupling end (25) and the first and second clamping elements (63, 65) are provided on the coupling section (35).

4. The suction foot assembly according to one or more of claims 1 to 3, wherein the base (39) extends from a first to a second end (41, 43), and
wherein the pin axis (59) runs parallel to a connecting line (61) extending parallel to the contact plane between the ends (41, 43) of the base (39).

5. The suction foot assembly according to one or more of claims 1 to 4, wherein an insertion body (71), which extends along a first longitudinal axis (73), is attached to one of the base (39) and the suction foot holder (33), and
wherein, on the other of the base (39) and the suction foot holder (33), a retaining section (95) is provided in which a receiving area (99) is formed,
wherein the insertion body (71) is received in the receiving area (99) and is in an inserted position,
wherein the receiving area (99) is designed such that it extends along a second longitudinal axis (97),
wherein the second longitudinal axis (97) runs parallel to the contact plane, and
wherein the insertion body (71) and the receiving area (99) are designed such that the insertion body (71) can be pushed into the receiving area (99) along the second longitudinal axis (97) until it reaches the inserted position in order to be received in the receiving area (99), wherein the first and the second longitudinal axes (73, 97) coincide and, in the inserted position, the insertion body (71) is pivotable about the second longitudinal axis (97) relative to the retaining section (95).

6. A suction foot assembly according to claim 5, wherein the second longitudinal axis (97) and the pin axis (59) are spaced apart and parallel to each other.

7. The suction foot assembly according to claim 5 or 6, wherein the insertion body (71) has an interior space (77),
wherein one of the interior (77) and the receiving area (99) is connected to the suction chamber (55), and wherein
the other of the interior (77) and the receiving area (99) is connected to a suction connection (83) for a suction hose (85), which is provided on the insertion body (71) or the retaining section (95), and, in the inserted position, the receiving area (99) is connected to the interior (77),
or
one of the interior (77) and the receiving area (99) is connected to a suction connection (83) for a suction hose (85), which is provided on the insertion body (71) or the retaining section (95), and, preferably in the inserted position, the receiving area (95) is connected to the interior (77).

8. The suction foot assembly according to one or more of claims 5 to 7, wherein the insertion body (71) is provided on the base (39) and the interior (77) is connected to the suction chamber (55) and
wherein the insertion body (71) has a suction connection (83) which is connected to the interior space (77).

9. The suction foot assembly according to claim 8, wherein the suction connection (83) is arranged on a first end surface (81) of the insertion body (71) extending perpendicular to the first longitudinal axis (73).

10. The suction foot assembly according to claim 9, having a suction hose (85) with a connection piece (87),
wherein the suction hose (85) is designed to be connected directly or indirectly to a dirty liquid container of a floor cleaning machine (1),
wherein the connecting piece (87) and the suction connection (83) are designed such that the connecting piece (87) can be inserted into the suction connection (83) and, in the inserted state, can be pivoted relative to the suction connection (83) about the first longitudinal axis (73),
wherein the insertion body (71) has a first slot (91) extending through a wall of the insertion body (71) at the suction connection (83), which first slot has a first locking section (93) extending in a radial plane to the first longitudinal axis (73),
wherein the first slot (91) has a first opening towards the first end surface (81),
wherein the retaining section (95) has a second slot (103) which is open towards a second end surface (101) on the retaining section (95), the second end surface (101) facing in the same direction as the first end surface (81), and which has a second locking section (105) extending in a radial plane to the second longitudinal axis (97),
wherein, when the insertion body (71) is in the inserted position, the first and second locking sections (93, 105) overlap,
wherein the connecting piece (87) has a locking element (89) extending radially therefrom, and
wherein the slots (91, 103) are designed such that the locking element (89) can be brought into the first and second locking sections (93, 105) when the connecting piece (87) is inserted into the suction connection (83) by sliding and pivoting the connecting piece (87) relative to the suction connection (83).

11. A floor cleaning machine having a chassis (7) with wheels (5), so that the chassis (7) is designed to be moved over a floor surface (11) to be cleaned, and having a machine housing (3),
wherein a scrubbing cover (13) with cleaning elements for engagement with the floor surface (11) to be cleaned is provided on the machine housing (3), and
wherein the floor cleaning machine comprises a suction foot assembly (17) according to one of claims 1 to 10.

12. The floor cleaning machine according to claim 11, wherein the machine end (27) is pivotally mounted on the machine housing (3) or the scrubbing cover (13) about a vertical axis (31), wherein the vertical axis (31), in particular when the floor cleaning machine (1) is arranged on a floor surface (11) to be cleaned, runs perpendicular to the contact plane.

## Revendications

1. Agencement de pied d'aspiration pour le montage sur une machine de nettoyage de sols (1), comportant un pied d'aspiration (37) qui présente une base (39) sur laquelle sont montées une lèvre d'aspiration avant (45) et une lèvre d'aspiration arrière (47), lesquelles s'étendent, de préférence parallèles les unes aux autres, à partir de la base (39) et lesquelles sont espacées les unes des autres de telle sorte qu'un espace d'aspiration (55) est délimité par les lèvres d'aspiration (45, 47) et la base (39),
dans lequel des arêtes (49, 51) des lèvres d'aspiration (45, 47) éloignées de la base (39) s'étendent dans un plan de contact et sont conçues pour reposer sur une surface de sol à nettoyer (11),
comportant un support de pied d'aspiration (33) relié à la base (39) et présentant une section d'accouplement (35),
comportant un raccord de pied d'aspiration (23) qui s'étend entre une extrémité d'accouplement (25) et une extrémité de machine (27),
dans lequel l'extrémité de machine (27) est conçue pour être montée sur une machine de nettoyage de sols (1), de préférence pivotante autour d'un axe vertical (31), **caractérisé en ce que** l'une parmi la section d'accouplement (35) et l'extrémité d'accouplement (25) présente une section de broche (57) qui s'étend le long d'un axe de broche (59) qui s'étend parallèlement au plan de contact,
dans lequel l'autre parmi la section d'accouplement (35) et l'extrémité d'accouplement (25) présente un premier et un second élément de serrage (63, 65) qui sont opposés l'un à l'autre, présentent des extrémités libres (69) et sont concaves de façon à former une section de réception (67) entre les éléments de serrage (63, 65) dans laquelle est logée la section de broche (57),
dans lequel la distance séparant les extrémités libres (69) des éléments de serrage (63, 65) les unes des autres est inférieure à la distance entre les éléments de serrage (63, 65) dans la section de réception (67) et
dans lequel un ou les deux éléments de serrage (63, 65) sont déformables élastiquement de telle sorte que la section de broche (57) peut être sortie et insérée dans la section de réception (67) perpendiculairement à sa direction d'extension par les extrémités libres (69).

2. Agencement de pied d'aspiration selon la revendication 1, dans lequel la section de broche (57) et la section de réception (67) sont conçues de telle sorte que la section de broche (57) peut pivoter autour de l'axe de broche (59) par rapport aux éléments de serrage (63, 65).

3. Agencement de pied d'aspiration selon la revendication 1 ou 2, dans lequel la section de broche (57) est placée sur l'extrémité d'accouplement (25) et les premier et second éléments de serrage (63, 65) sont placés sur la section d'accouplement (35).

4. Agencement de pied d'aspiration selon une ou plusieurs des revendications 1 à 3, dans lequel la base (39) s'étend d'une première à une seconde extrémité (41, 43) et
dans lequel l'axe de broche (59) s'étend parallèlement à une ligne de liaison (61) qui s'étend parallèlement au plan de contact entre les extrémités (41, 43) de la base (39).

5. Agencement de pied d'aspiration selon une ou plusieurs des revendications 1 à 4, dans lequel un corps d'insertion (71) qui s'étend le long d'un premier axe longitudinal (73) est monté sur l'un parmi la base (39) et le support de pied d'aspiration (33), et
dans lequel une section de support (95) est prévue sur l'autre parmi la base (39) et le support de pied d'aspiration (33), dans laquelle section de support une zone de réception (99) est formée,
dans lequel le corps d'insertion (71) est reçu dans la zone de réception (99) et se trouve dans une position insérée,
dans lequel la zone de réception (99) est conçue de telle sorte qu'elle s'étend le long d'un second axe longitudinal (97),
dans lequel le second axe longitudinal (97) s'étend parallèlement au plan de contact et
dans lequel le corps d'insertion (71) et la zone de réception (99) sont conçus de telle sorte que le corps d'insertion (71) pour une réception dans la zone de réception (99) peut être inséré le long du second axe longitudinal (97) dans la zone de réception (99) jusqu'à la position insérée, dans lequel le premier et le second axe longitudinal (73, 97) coïncident et, dans la position insérée, le corps d'insertion (71) peut pivoter autour du second axe longitudinal (97) par rapport à la section de support (95).

6. Agencement de pied d'aspiration selon la revendication 5, dans lequel le second axe longitudinal (97) et l'axe de broche (59) sont espacés et parallèles l'un à l'autre.

7. Agencement de pied d'aspiration selon la revendication 5 ou 6, dans lequel le corps d'insertion (71) présente un espace intérieur (77),
dans lequel l'un parmi l'espace intérieur (77) et la zone de réception (99) est relié à l'espace d'aspiration (55) et dans lequel
l'autre parmi l'espace intérieur (77) et la zone de réception (99) est relié à un raccord d'aspiration (83) pour un tuyau d'aspiration (85), qui est posé sur le corps d'insertion (71) ou sur la section de support (95), et relié avec l'espace intérieur (77) dans la position insérée de la zone de réception (99),
ou
l'un parmi l'espace intérieur (77) et la zone de réception (99) est relié à un raccord d'aspiration (83) pour un tuyau d'aspiration (85), qui est posé sur le corps d'insertion (71) ou sur la section de support (95), et relié avec l'espace intérieur (77) de préférence dans la position insérée de la zone de réception (95).

8. Agencement de pied d'aspiration selon une ou plusieurs des revendications 5 à 7, dans lequel le corps d'insertion (71) est posé sur la base (39) et l'espace intérieur (77) est relié à l'espace d'aspiration (55) et
dans lequel le corps d'insertion (71) présente un raccord d'aspiration (83) qui est relié à l'espace intérieur (77).

9. Agencement de pied d'aspiration selon la revendication 8, dans lequel le raccord d'aspiration (83) est agencé sur une première surface d'extrémité (81) du corps d'insertion (71) qui s'étend perpendiculairement au premier axe longitudinal (73).

10. Agencement de pied d'aspiration selon la revendication 9, comportant un tuyau d'aspiration (85) muni d'un manchon de raccordement (87),
dans lequel le tuyau d'aspiration (85) est conçu pour être raccordé directement ou indirectement à un réservoir de liquide sale d'une machine de nettoyage de sols (1),
dans lequel le manchon de raccordement (87) et le raccord d'aspiration (83) sont conçus de telle sorte que le manchon de raccordement (87) peut être inséré dans le raccord d'aspiration (83) et, à l'état inséré, peut pivoter autour du premier axe longitudinal (73) par rapport au raccord d'aspiration (83),
dans lequel le corps d'insertion (71) sur le raccord d'aspiration (83) présente une première fente (91) qui s'étend à travers une paroi du corps d'insertion (71) et présente une première section de verrouillage (93) s'étendant dans un plan radial par rapport au premier axe longitudinal (73),
dans lequel la première fente (91) présente une première ouverture vers la première surface d'extrémité (81),
dans lequel la section de support (95) présente une seconde fente (103) ouverte sur une seconde surface d'extrémité (101) sur la section de support (95), dans lequel la seconde surface d'extrémité (101) est orientée dans la même direction que la première surface d'extrémité (81), et qui présente une seconde section de verrouillage (105) s'étendant dans un plan radial par rapport au second axe longitudinal (97),
dans lequel les première et seconde sections de verrouillage (93, 105) se chevauchent lorsque le corps d'insertion (71) est dans la position insérée,
dans lequel le manchon de raccordement (87) présente un élément de verrouillage (89) s'étendant radialement à partir de celui-ci et
dans lequel les fentes (91, 103) sont conçues de telle sorte que lorsque le manchon de raccordement (87) est inséré dans le raccord d'aspiration (83), l'élément de verrouillage (89) peut être monté dans les première et seconde sections de verrouillage (93, 105) par déplacement et pivotement du manchon de raccordement (87) par rapport au raccord d'aspiration (83).

11. Machine de nettoyage de sols comportant un châssis (7) doté de roues (5), de sorte que le châssis (7) est conçu pour être déplacé sur une surface de sol à nettoyer (11), et comportant un carter de machine (3),
dans laquelle un plateau de lavage (13) comportant des éléments de nettoyage destinés à venir en prise avec la surface de sol à nettoyer (11) est prévu sur le carter de machine (3), et
dans laquelle la machine de nettoyage de sols présente un agencement de pied d'aspiration (17) selon l'une des revendications 1 à 10.

12. Machine de nettoyage de sols selon la revendication 11, dans laquelle l'extrémité de machine (27) est supportée sur le carter de machine (3) ou sur le plateau de lavage (13) de manière à pouvoir pivoter autour d'un axe vertical (31), dans laquelle l'axe vertical (31), en particulier lorsque la machine de nettoyage de sols (1) est agencée sur une surface de sol à nettoyer (11), s'étend perpendiculairement au plan de contact.
